# FASCICULE DE BREVET EUROPEEN

(11) **EP 3 932 145 B1**
(45) Date de publication et mention de la délivrance du brevet: **17.07.2024**
(21) Numéro de dépôt: 20707728.0
(22) Date de dépôt: 10.02.2020
(51) Int. Cl.: H04W 76/20

(54) **TRAITEMENT D'UN APPEL PAR VIDÉOCONFÉRENCE ENTRE DEUX TERMINAUX**
VERARBEITUNG EINES ANRUFS DURCH VIDEOKONFERENZ ZWISCHEN ZWEI ENDGERÄTEN
PROCESSING OF A CALL BY VIDEOCONFERENCE BETWEEN TWO TERMINALS

(30) Priorité: 25.02.2019 FR 1901897
(43) Date de publication de la demande: 05.01.2022
(73) Titulaire: Orange, 92130 Issy-les-Moulineaux (FR)
(72) Inventeur: TCHOUMI, Paul, 92326 Châtillon Cedex (FR); VERSEILLIE, Yoann, 92326 Châtillon Cedex (FR)
(74) Mandataire: Plasseraud IP
(86) Numéro de dépôt international: PCT/FR2020/050221
(87) Numéro de publication internationale: WO 2020/174144

(56) Documents cités:
- WO-A1-2005/120115
- KR-B1- 100 646 228
- US-A1- 2015 103 785
- ANONYMOUS: "Orange Mobile World Congress 2019: Virtual Press Room - orange.com", 22 February 2019 (2019-02-22), XP055610736, Retrieved from the Internet <URL:https://www.orange.com/en/Press-Room/Folder/Orange-Mobile-World-Congress-2019> [retrieved on 20190805]
- "3rd Generation Partnership Project; Technical Specification Group Services and System Aspects; Redial solution for voice-video switching (Release 15)", 3GPP STANDARD; TECHNICAL REPORT; 3GPP TR 23.903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.0.0, 21 June 2018 (2018-06-21), pages 1 - 18, XP051473124

## Description

La présente invention concerne le traitement d'un appel entre deux terminaux via un réseau.

Plus particulièrement, dans le cas d'un appel en cours par vidéoconférence entre deux terminaux, il est possible que la qualité de l'appel se dégrade du fait des conditions courantes du réseau.

Typiquement, dans un réseau cellulaire, la qualité du lien entre deux terminaux peut se détériorer (du fait d'interférences, d'un mauvais lien entre une station de base du réseau et l'un des terminaux, du fait de congestions du réseau, ou autres). Si le débit via le réseau diminue trop, une session de vidéoconférence en cours (par exemple au protocole IP) peut s'interrompre pour passer seulement en audio (en « voix sur IP » ou VOIP). En effet, une qualité de vidéoconférence correcte au protocole IP est assurée par un débit voisin de 400ko/sec. En-dessous d'un tel débit, elle peut être dégradée au point de devoir basculer l'appel en audio seulement (en VOIP). En-dessous d'un deuxième seuil de débit (typiquement 40ko/sec), la communication en VOIP peut être dégradée au point de s'interrompre complètement.

L'un des utilisateurs des deux terminaux doit alors rappeler son interlocuteur pour poursuivre l'appel en mode de communication de type GSM simplement (de première ou deuxième génération - mode « Edge »). Ce type de communication GSM supporte en effet un débit faible (typiquement compris entre quelques ko/sec et 40ko/sec).

Toutefois, une telle démarche oblige actuellement l'un des utilisateurs à recomposer le numéro de téléphone de son interlocuteur sur son terminal. Ce « numéro de téléphone » est plus généralement un identifiant dans le réseau du terminal de l'interlocuteur (qui peut être par exemple un identifiant de type MSISDN dans un réseau cellulaire).

WO 2005/120115 A1 divulgue un procédé pour réaliser un fall-back entre un appel audio et un appel vidéo en cours d'appel. Un serveur, situé entre les deux terminaux, transmet une requête aux terminaux en cours d'appel afin d'établir l'appel audio a la place de l'appel vidéo. Le procédé est réalisé par un serveur;

KR 100 646 228 B1 divulgue un procédé pour basculer d'un appel vidéo à un appel audio en cours basé sur une qualité radio mesurée par l'un des deux terminaux. Le procédé est réalisé directement par le terminal détectant la dégradation.

La présente invention vient améliorer la situation.

Elle propose à cet effet, de façon générale, un procédé de traitement d'un appel entre au moins deux terminaux via un réseau,
une session de vidéoconférence entre les deux terminaux étant en cours,
des conditions du réseau étant susceptibles de dégrader une qualité d'appel par vidéoconférence entre les deux terminaux,
le procédé, mis en oeuvre par au moins un serveur, comportant les étapes :
   - sur réception, auprès du serveur, d'un premier message de dégradation de la qualité d'appel par vidéoconférence, le message comprenant des identifiants dans le réseau des deux terminaux, interrompre l'appel par vidéoconférence,

Et, chaque terminal comportant une interface homme machine d'alerte d'un appel entrant,
- utiliser les identifiants dans le réseau des deux terminaux pour transmettre à chaque terminal un deuxième message de mise en relation entre les deux terminaux sous la forme d'un appel audio, le message comportant une instruction d'empêcher d'animer l'interface d'alerte d'appel entrant de chaque terminal.

Ainsi, l'appel audio peut succéder à l'appel par vidéoconférence, en cas de dégradation de la qualité d'appel par vidéoconférence, sans nécessiter une intervention quelconque d'utilisateur de l'un des deux terminaux.

Dans une forme de réalisation, le deuxième message est sous la forme d'au moins une trame contenant, en en-tête de trame, ladite instruction d'empêcher d'animer l'interface d'alerte d'appel entrant.

Ainsi, cette simple instruction ajoutée en en-tête de trame permet de mettre en oeuvre le basculement de la session de vidéoconférence à l'appel audio sans modifier particulièrement le contenu-même de la trame (« payload ») ou son format actuel.

Par exemple, la session de vidéoconférence peut être au protocole IP, et la trame précitée peut être une trame SIP (« session initiation protocol ») et simplement son en-tête peut être modifié pour y ajouter l'instruction précitée.

Par ailleurs, dans une réalisation où le réseau précité est un réseau cellulaire, l'appel audio peut être établi par une communication de type GSM (de première ou deuxième génération - en mode « edge »), en cas de faible débit contraignant à interrompre la session de vidéoconférence.

En outre, dans une réalisation, l'un au moins des terminaux (ou les deux) est configuré pour :
- mesurer répétitivement une qualité d'appel par vidéoconférence entre les deux terminaux, et
- transmettre au serveur une mesure de qualité d'appel par vidéoconférence sous la forme dudit premier message,
- et par ailleurs, sur réception du deuxième message, lire et interpréter ce deuxième message pour recevoir l'appel audio sans animer l'interface d'alerte d'appel entrant.

Dans une forme de réalisation possible, préalablement à l'établissement de la session de vidéoconférence, le terminal appelant parmi les deux terminaux :
- mesure une qualité attendue d'un appel par vidéoconférence entre les deux terminaux, et
- anime une interface homme machine sur le terminal appelant pour indiquer à un utilisateur une estimation de la qualité attendue de l'appel par vidéoconférence, avant de déclencher l'appel.

Une telle réalisation permet à l'utilisateur du terminal appelant de décider de déclencher l'appel néanmoins (audio et non vidéo) ou d'attendre de bénéficier de meilleures conditions du réseau pour déclencher la session de vidéoconférence ultérieurement.

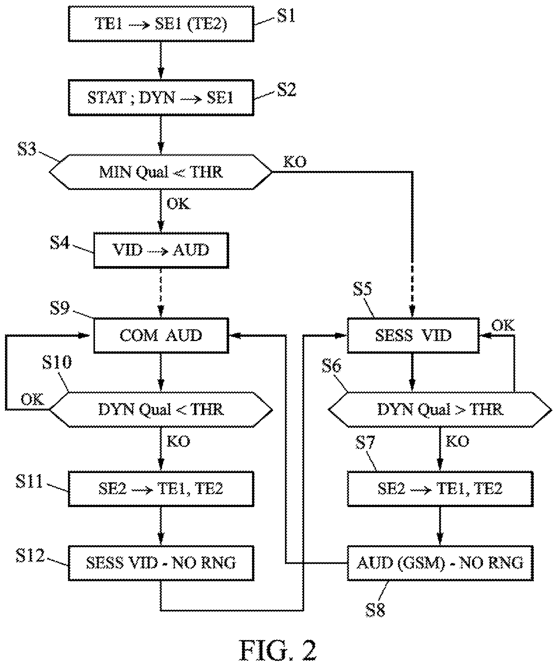

En outre, la mesure de cette qualité attendue peut être transmise au serveur pour déclencher directement un appel audio (plutôt que vidéo), comme présenté dans un exemple de réalisation détaillé plus loin en référence à la figure 2 (étape S4).

Dans une réalisation, réversiblement, dans le cas où une session d'appel audio est en cours entre les deux terminaux, et si des conditions du réseau sont améliorées pour permettre un appel par vidéoconférence entre les deux terminaux, le procédé peut comporter en outre les étapes, mises en oeuvre par le serveur :
- sur réception, auprès du serveur, d'un troisième message d'amélioration des conditions du réseau, le troisième message comprenant des identifiants dans le réseau des deux terminaux, interrompre l'appel audio en cours,
- utiliser les identifiants dans le réseau des deux terminaux pour transmettre à chaque terminal un quatrième message, de mise en relation entre les deux terminaux sous la forme d'un appel par vidéoconférence, le quatrième message comportant une instruction d'empêcher d'animer l'interface d'alerte d'appel entrant de chaque terminal.

Ainsi, l'appel par vidéoconférence succède à l'appel audio, en cas d'amélioration des conditions du réseau, sans nécessiter une intervention d'utilisateur de l'un des deux terminaux.

La présente invention vise aussi un système de traitement d'un appel entre au moins deux terminaux via un réseau,
une session de vidéoconférence entre les deux terminaux étant en cours,
des conditions du réseau étant susceptibles de dégrader une qualité d'appel par vidéoconférence entre les deux terminaux, dans lequel au moins un serveur du système est configuré pour:
   - sur réception, auprès du serveur, d'un premier message de dégradation de la qualité d'appel par vidéoconférence, le message comprenant des identifiants dans le réseau des deux terminaux, interrompre l'appel par vidéoconférence,

Et, chaque terminal comportant une interface homme machine d'alerte d'un appel entrant,
- utiliser les identifiants dans le réseau des deux terminaux pour transmettre à chaque terminal un deuxième message de mise en relation entre les deux terminaux sous la forme d'un appel audio, le message comportant une instruction d'empêcher d'animer l'interface d'alerte d'appel entrant de chaque terminal.

La présente invention vise aussi un serveur d'un système au sens de l'invention, configuré pour:
- sur réception, auprès du serveur, d'un premier message de dégradation de la qualité d'appel par vidéoconférence, le message comprenant des identifiants dans le réseau des deux terminaux, interrompre l'appel par vidéoconférence,

Et, chaque terminal comportant une interface homme machine d'alerte d'un appel entrant,
- utiliser les identifiants dans le réseau des deux terminaux pour transmettre à chaque terminal un deuxième message de mise en relation entre les deux terminaux sous la forme d'un appel audio, le message comportant une instruction d'empêcher d'animer l'interface d'alerte d'appel entrant de chaque terminal.

Typiquement, ce serveur peut comporter un premier circuit de traitement (comprenant par exemple une mémoire pour stocker des instructions d'un programme d'ordinateur pour la mise en oeuvre du procédé, un processeur pour exécuter ces instructions, une ou plusieurs interfaces de communication via le réseau précité) pour la mise en oeuvre de ces étapes.

La présente invention vise aussi un terminal d'un système selon l'invention, spécialement configuré pour:
- mesurer répétitivement une qualité d'appel par vidéoconférence entre les deux terminaux, et
- transmettre au serveur une mesure de qualité d'appel par vidéoconférence sous la forme dudit premier message,
- et, sur réception du deuxième message, lire et interpréter le deuxième message pour recevoir l'appel audio sans animer l'interface homme machine.

Là encore, ce terminal peut comporter un deuxième circuit de traitement (comprenant par exemple une mémoire pour stocker des instructions d'un programme d'ordinateur, un processeur pour exécuter ces instructions, une interface de communication via le réseau précité) pour la mise en oeuvre de ces étapes.

La présente invention vise aussi un programme informatique comportant des instructions pour la mise en oeuvre du procédé selon l'invention, lorsque ces instructions sont exécutées par un processeur d'un circuit de traitement.

Ces instructions peuvent être distribuées auprès du serveur précité et de l'un au moins des terminaux. Elles peuvent être stockées durablement dans un support mémoire non transitoire (du serveur et/ou du terminal).

Un exemple d'algorithme général d'un tel programme est illustré sur la figure 2 commentée ci-après.

D'ailleurs, d'autres avantages et caractéristiques de l'invention sont présentés dans la description détaillée ci-après d'exemples de réalisation de l'invention, ainsi que dans les dessins annexés sur lesquels :
**Fig. 1**

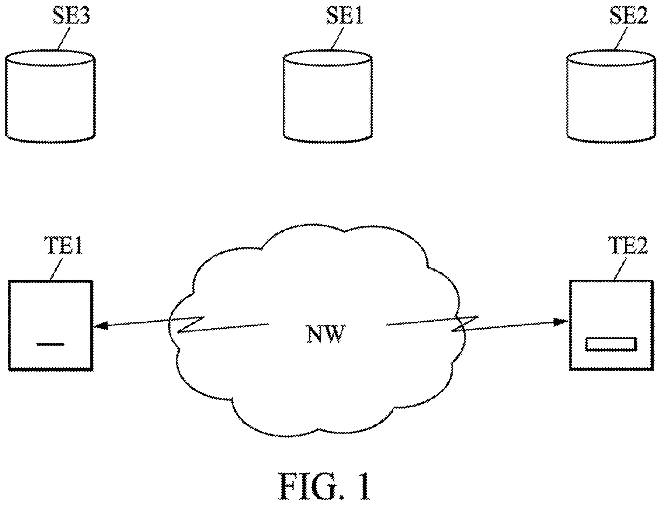

   [Fig. 1] la figure 1 illustre un exemple de système pour la mise en oeuvre de l'invention,
**Fig. 2**
   [Fig. 2] la figure 2 illustre un exemple d'une succession d'étapes pouvant constituer un procédé au sens de l'invention.

En référence à la figure 1, un système pour la mise en oeuvre de l'invention comporte, selon un exemple de réalisation :
- au moins un premier terminal TE1 et un deuxième terminal TE2, aptes à communiquer via un réseau NW,
- un premier serveur SE1 d'application de synchronisation d'appel par vidéoconférence (serveur de type « vidéo chat sync » par exemple),
- un deuxième serveur SE2 de mise en relation entre deux terminaux au moins, par exemple du type utilisé par une plateforme d'appels et capable de contacter à la fois un téléphone « appelé » et un téléphone de la plateforme, « appelant », pour les mettre en relation,
- et, dans l'exemple représenté, un troisième serveur SE3, de signalisation par exemple WebRTC, pour la mise en oeuvre de traitement notamment de voix sur IP et de session de vidéoconférence par exemple au protocole IP.

Bien entendu, un seul serveur ou deux serveurs seulement peuvent mettre en oeuvre, fonctionnellement, les opérations qui sont décrites ci-après.

De même, le système peut comprendre plus de trois serveurs. Par exemple, un serveur de test de qualité de lien (par exemple pour l'application « Calireso » ^{™}) peut être mis en oeuvre pour mesurer la qualité du lien via le réseau NW entre les deux terminaux et, par exemple, transmettre cette mesure à l'un des terminaux TE1, TE2 pour la présenter à un utilisateur de ce terminal, via une interface homme machine du terminal, comme on le verra dans un exemple de réalisation plus loin.

Typiquement, la mise en oeuvre de l'application Calireso consiste à collecter des données de qualités de lien en vue d'une prévision statistique à un instant courant.

En complément ou en variante d'une telle estimation statistique de la qualité de lien, des applications de test dynamique de débit dans le réseau NW peuvent être mises en oeuvre par chaque terminal TE1, TE2. Là encore, un serveur par exemple d'application « LifBe » peut être mis en oeuvre.

Les serveurs d'évaluation de la qualité de communication ne sont pas représentés sur la figure 1, pour en conserver sa clarté.

Par ailleurs, les terminaux TE1, TE2 peuvent être par exemple des terminaux mobiles dans un réseau NW, cellulaire. Ainsi, la qualité d'une communication peut dépendre de l'état du réseau (congestions, ou autres), de la réception du réseau pour chaque terminal, etc.

En référence maintenant à la figure 2, une première étape peut consister par exemple, pour le terminal appelant TE1 à transmettre au serveur d'application SE1 une information de prévision d'appel par vidéoconférence avec le terminal appelé TE2. Cette transmission d'information peut être mise en oeuvre typiquement par exécution d'une application logicielle sur le terminal TE1, pour transmettre au serveur d'application SE1 en particulier les « numéros » des terminaux TE1 et TE2, correspondant à leur identifiant dans le réseau NW (par exemple leur identifiant ISDN ou encore leur identifiant MSISDN pour des terminaux mobiles dans un réseau cellulaire).

Par ailleurs, à l'étape S2, le serveur d'application SE1 peut recevoir du terminal TE1 une ou plusieurs évaluations statistique(s) STAT et/ou dynamique(s) DYN (via respectivement les applications Calireso et LifBe par exemple) de la qualité du lien avec le réseau. Eventuellement, le serveur SE1 peut recevoir du deuxième terminal TE2 aussi une ou plusieurs mesures de sa qualité de lien.

Le serveur SE1, à l'étape suivante S3, peut évaluer alors une qualité de la communication à venir entre les deux terminaux TE1, TE2, par exemple en retenant le minimum entre :
- l'évaluation dynamique de la qualité de réception de réseau instantanée par le premier terminal TE1,
- l'évaluation dynamique de la qualité de réception de réseau instantanée par le deuxième terminal TE2, et
- l'évaluation statistique de la qualité de lien, habituelle pour de même paramètres (d'horaire d'une journée, de congestion actuelle du réseau, pour des localisations correspondant respectivement à celles des terminaux TE1 et TE2, etc.), cette donnée pouvant être fournie typiquement par l'application Calireso^{™} précitée.

Par exemple, à l'étape S3, le serveur SE1 peut comparer le minimum MIN parmi ces évaluations, à un seuil THR, pour déterminer que le débit du réseau correspondant à ce minimum MIN n'est pas suffisant pour établir une session de vidéoconférence (par exemple en-dessous de 400ko/sec). Si tel est le cas (flèche OK en sortie du test S3 de la figure 2), alors l'appel à établir est de type audio (en voix sur IP ou directement par appel GSM si l'évaluation MIN est encore inférieure à un seuil par exemple de 40ko/sec). Dans ce cas, une interface homme machine du terminal appelant TE1 peut s'animer pour prévenir son utilisateur que l'appel à établir doit être audio.

Une telle réalisation est avantageuse en tant que telle (avant même l'établissement effectif de l'appel) et peut éventuellement faire l'objet d'une protection séparée.

Dans le cas où le lien est de qualité suffisante pour une session de vidéoconférence (flèche KO en sortie du test S3), la session de vidéoconférence peut être établie à l'étape S5.

Ensuite à l'étape S6, répétitivement (par exemple cycliquement toutes les 30 secondes), la qualité du lien est testée, à l'aide des applications précitées Calireso et/ou LifBe, ou encore à l'aide d'une application interne au terminal (sans nécessiter de serveur particulier), par exemple l'application « getStat()» d'évaluation de qualité de réception auprès d'un terminal donné.

Si l'un des terminaux, pendant la session vidéo, constate dynamiquement que la qualité est inférieure à un seuil THR à l'étape S6 (flèche KO en sortie du test S6), ce terminal envoie à l'étape S7 au serveur d'application SE1, le « premier message » précité, de dégradation de la qualité d'appel par vidéoconférence, ce message comprenant des identifiants (ISDN ou MSISDN) dans le réseau NW des deux terminaux TE1 et TE2. Le serveur d'application SE1 transmet, dans le « deuxième message » précité, ces identifiants au serveur de mise en relation SE2 afin que ce dernier contacte les deux terminaux TE1 et TE2 pour les mettre en relation. Le serveur SE2 adresse en particulier une trame SIP à chacun des deux terminaux TE1 et TE2 et l'en-tête de cette trame pilote l'interface d'alerte d'appel entrant de chaque terminal pour ne pas qu'elle s'anime (par exemple pour ne pas faire sonner le terminal en raison de l'appel entrant). La session vidéo peut alors s'interrompre et à l'étape S8, l'appel audio (par GSM typiquement) peut s'amorcer sans faire « sonner » les téléphones.

Bien entendu, le serveur d'application SE1 et le serveur de mise en relation SE2 peuvent constituer un même serveur. Le serveur SE3 pour l'application WebRTC peut en être aussi partie intégrante.

En référence à nouveau à la figure 2, réversiblement, à l'étape S9, la communication audio peut être établie, et néanmoins, répétitivement à l'étape S10, tant que la qualité du lien n'a pas dépassé le seuil THR (flèche OK en sortie du test S10), la communication reste audio. Sinon (flèche KO en sortie du test S10), la qualité du lien devient suffisante pour repasser l'appel en session de vidéoconférence et à cet effet, l'un des terminaux transmet au serveur SE2 le « troisième message » comportant les identifiants d'appel de chaque terminal afin de les mettre en relation (étape S11) et basculer ainsi l'appel en session de vidéoconférence au protocole IP, et ce sans faire sonner les terminaux, par l'usage d'une trame SIP comportant une telle instruction et transmise du serveur SE2 aux terminaux TE1 et TE2 à l'étape S12.

Typiquement l'instruction en en-tête de trame SIP peut être du type ci-après en langage CCXML (pour « Call Control extensible Markup Language ») :

```
<createcall ... hint="X-noRinging=1 "/>
```

La requête de mise en relation qu'envoie le serveur SE1 au serveur SE2 peut être par exemple une requête http de type :
«

```
curl -k -v -X POST -H "Authorization: Bearer xxx" -H "Content-Type:
 application/json" -d '{"maxCallDuration": 360,"firstCalledParticipant": {"uri":
 "tel:+3361..." , "ringingTimeout": "60"}, "secondCalledParticipant": { "uri" :
 "tel:+3362...." , "ringingTimeout" : "60" }}' https://SERV.SE2 /...
 api/callSessions/createTwoParticipantsCallNoRinging
 »
```

Ici, « +3361 ... » et « :+3362... » représentent les identifiants MSISDN respectifs des premier et deuxième terminaux TE1 et TE2.

Bien entendu, la présente invention ne se limite pas aux formes de réalisation présentées ci-avant à titre d'exemple.

Ces formes de réalisation sont typiquement susceptibles d'évoluer au gré des protocoles appliqués couramment (IP ou autres).

En outre, l'invention peut s'appliquer à deux terminaux ou encore à plus de deux terminaux. Il est possible en effet de mettre en relation plus de deux terminaux typiquement aux étapes S11 et S7.

## Revendications

1. Procédé de traitement d'un appel entre au moins deux terminaux via un réseau, une session de vidéoconférence entre lesdits terminaux étant en cours,
des conditions du réseau étant susceptibles de dégrader une qualité d'appel par vidéoconférence entre lesdits terminaux,
le procédé, mis en oeuvre par au moins un serveur, comportant les étapes :
- sur réception, auprès du serveur, d'un premier message de dégradation de la qualité d'appel par vidéoconférence, le premier message provenant d'au moins un desdits terminaux et comprenant des identifiants dans le réseau desdits terminaux, interrompre l'appel par vidéoconférence, et
- utiliser lesdits identifiants desdits terminaux pour transmettre auxdits terminaux un deuxième message de mise en relation, sous la forme d'un appel audio, desdits terminaux, le deuxième message comportant une instruction d'empêcher d'animer une interface homme machine d'alerte d'un appel entrant.

2. Procédé selon la revendication 1, dans lequel le deuxième message est sous la forme d'au moins une trame contenant, en en-tête de trame, ladite instruction d'empêcher d'animer l'interface d'alerte d'appel entrant.

3. Procédé selon la revendication 1 ou 2, dans lequel la session de vidéoconférence est au protocole IP.

4. Procédé selon la revendication 2, dans lequel ladite trame est une trame SIP.

5. Procédé selon l'une des revendications 1 à 4, dans lequel le réseau est un réseau cellulaire, et l'appel audio est établi par communication GSM.

6. Procédé selon l'une des revendications 1 à 5, une session d'appel audio étant en cours entre les dits terminaux, et des conditions du réseau étant améliorées pour permettre un appel par vidéoconférence entre lesdits terminaux,
le procédé comportant en outre les étapes:
- sur réception d'un troisième message d'amélioration des conditions du réseau, le troisième message comprenant des identifiants dans le réseau desdits terminaux, interrompre l'appel audio en cours,
- utiliser les identifiants dans le réseau desdits terminaux pour transmettre auxdits terminaux un quatrième message, de mise en relation, sous la forme d'un appel par vidéoconférence, desdits terminaux, le quatrième message comportant une instruction d'empêcher d'animer l'interface homme machine d'alerte d'appel entrant.

7. Procédé mis en oeuvre par au moins un premier terminal d'un réseau de communication, le procédé étant mis en oeuvre lors d'une session de vidéoconférence entre ledit premier terminal et au moins un second terminal, des conditions du réseau étant susceptibles de dégrader une qualité d'appel par vidéoconférence entre lesdits premier et second terminaux,
comprenant:
- transmettre à un serveur une mesure de ladite qualité d'appel par vidéoconférence, sous la forme d'un premier message, le premier message comprenant des identifiants dans le réseau desdits terminaux,
- et, sur réception d'un deuxième message de mise en relation, sous la forme d'un appel audio, desdits premier et second terminaux, ledit deuxième message comportant une instruction pour empêcher d'animer une interface homme machine d'alerte d'un appel entrant, lire et interpréter le deuxième message pour recevoir l'appel audio sans animer l' interface homme machine d'alerte d'appel entrant dudit premier terminal.

8. Procédé selon la revendication 7, dans lequel, ledit premier terminal étant le terminal appelant, le procédé comprend préalablement à l'établissement de la session de vidéoconférence :
- animer une interface homme machine sur ledit premier terminal pour indiquer une estimation d'une qualité attendue d'un appel par vidéoconférence entre lesdits premier et second terminaux, avant de déclencher l'appel.

9. Serveur de traitement d'un appel entre au moins deux terminaux via un réseau, l'appel étant une session de vidéoconférence en cours entre lesdits terminaux, des conditions du réseau étant susceptibles de dégrader une qualité d'appel par vidéoconférence entre lesdits terminaux,
le serveur comprenant au moins un processeur configuré pour:
- sur réception, d'un premier message de dégradation de la qualité d'appel par vidéoconférence, le premier message provenant d'au moins un desdits terminaux et comprenant des identifiants dans le réseau desdits terminaux, interrompre l'appel par vidéoconférence, et
- utiliser les identifiants dans le réseau desdits terminaux pour transmettre auxdits terminaux un deuxième message de mise en relation sous la forme d'un appel audio, desdits terminaux, le deuxième message comportant une instruction d'empêcher d'animer une interface homme machine d'alerte d'un appel entrant.

10. Serveur selon la revendication 9, dans lequel le deuxième message est sous la forme d'au moins une trame contenant, en en-tête de trame, ladite instruction d'empêcher d'animer l'interface d'alerte d'appel entrant.

11. Serveur selon la revendication 9 ou 10, dans lequel le réseau est un réseau cellulaire, et l'appel audio est établi par communication GSM.

12. Serveur selon l'une des revendications 9 à 11, dans lequel ledit au moins un processeur est configuré pour:
- sur réception, alors qu'une session d'appel audio est en cours entre les dits terminaux, d'un troisième message d'amélioration des conditions du réseau, le troisième message comprenant des identifiants dans le réseau desdits terminaux et les conditions du réseau étant améliorées pour permettre un appel par vidéoconférence entre lesdits terminaux, interrompre l'appel audio en cours, et
- utiliser les identifiants dans le réseau desdits terminaux pour transmettre auxdits terminaux un quatrième message de mise en relation, sous la forme d'un appel par vidéoconférence, desdits terminaux, le quatrième message comportant une instruction d'empêcher d'animer l'interface homme machine d'alerte d'appel entrant.

13. Premier terminal d'un réseau de communication, comprenant au moins un processeur configuré pour:
lors d'une session de vidéoconférence entre ledit premier terminal et au moins un second terminal, des conditions du réseau étant susceptibles de dégrader une qualité d'appel par vidéoconférence entre lesdits premier et second terminaux,
- transmettre à un serveur une mesure de ladite qualité d'appel par vidéoconférence entre les deux terminaux, et
- transmettre au serveur une mesure de qualité d'appel par vidéoconférence sous la forme d'un premier message, le premier message comprenant des identifiants dans le réseau desdits premier et second terminaux,
- et, sur réception du deuxième message de mise en relation, sous la forme d'un appel audio, desdits premier et second terminaux, ledit deuxième message comportant une instruction pour empêcher d'animer une interface homme machine d'alerte d'un appel entrant, lire et interpréter le deuxième message pour recevoir l'appel audio sans animer l' interface homme machine d'alerte d'appel entrant dudit premier terminal.

14. Premier terminal d'un réseau de communication selon la revendication 13, dans lequel, ledit premier terminal étant le terminal appelant, ledit au moins un processeur est configuré pour animer une interface homme machine sur ledit premier terminal, préalablement à l'établissement de la session de vidéoconférence, pour indiquer une estimation d'une qualité attendue d'un appel par vidéoconférence entre lesdits premier et second terminaux, avant de déclencher l'appel.

15. Programme informatique comportant des instructions pour la mise en oeuvre du procédé selon l'une des revendications 1 à 8, lorsque lesdites instructions sont exécutées par un processeur d'un circuit de traitement.

## Patentansprüche

1. Verfahren zur Verarbeitung eines Anrufs zwischen mindestens zwei Endgeräten über ein Netzwerk, wobei zwischen den Endgeräten eine Videokonferenzsitzung läuft,
wobei Bedingungen des Netzwerks eine Qualität des Anrufs durch Videokonferenz zwischen den Endgeräten verschlechtern können,
wobei das Verfahren, das durch mindestens einen Server durchgeführt wird, die folgende Schritte umfasst:
- bei Empfang, an dem Server, einer ersten Nachricht über eine Verschlechterung der Qualität des Anrufs durch Videokonferenz, wobei die erste Nachricht von mindestens einem der Endgeräte stammt und Kennungen der Endgeräte in dem Netzwerk beinhaltet, Unterbrechen des Anrufs durch Videokonferenz und
- Verwenden der Kennungen der Endgeräte, um an die Endgeräte eine zweite Nachricht über eine Verknüpfung der Endgeräte in Form eines Audioanrufs zu übertragen, wobei die zweite Nachricht eine Anweisung zum Verhindern des Animierens einer Mensch-Maschine-Schnittstelle zur Benachrichtigung über einen eingehenden Anruf umfasst.

2. Verfahren nach Anspruch 1, wobei die zweite Nachricht in Form mindestens eines Rahmens vorliegt, der im Rahmenkopf die Anweisung zum Verhindern des Animierens der Schnittstelle zur Benachrichtigung über einen eingehenden Anruf enthält.

3. Verfahren nach Anspruch 1 oder 2, wobei die Videokonferenzsitzung über das IP-Protokoll erfolgt.

4. Verfahren nach Anspruch 2, wobei der Rahmen ein SIP-Rahmen ist.

5. Verfahren nach einem der Ansprüche 1 bis 4, wobei das Netzwerk ein Mobilfunknetzwerk ist und der Audioanruf durch GSM-Kommunikation hergestellt wird.

6. Verfahren nach einem der Ansprüche 1 bis 5, wobei zwischen den Endgeräten eine Audioanrufsitzung läuft und wobei sich Bedingungen des Netzwerks verbessert haben, sodass sie einen Anruf durch Videokonferenz zwischen den Endgeräten gestatten,
wobei das Verfahren ferner die folgenden Schritte umfasst:
- bei Empfang einer dritten Nachricht über eine Verbesserung der Bedingungen des Netzwerks, wobei die dritte Nachricht Kennungen der Endgeräte in dem Netzwerk beinhaltet, Unterbrechen des laufenden Audioanrufs,
- Verwenden der Kennungen der Endgeräte in dem Netzwerk, um an die Endgeräte eine vierte Nachricht über eine Verknüpfung der Endgeräte in Form eines Anrufs durch Videokonferenz zu übertragen, wobei die vierte Nachricht eine Anweisung zum Verhindern des Animierens der Mensch-Maschine-Schnittstelle zur Benachrichtigung über einen eingehenden Anruf umfasst.

7. Verfahren, das durch mindestens ein erstes Endgerät eines Kommunikationsnetzwerks durchgeführt wird, wobei das Verfahren während einer Videokonferenzsitzung zwischen dem ersten Endgerät und mindestens einem zweiten Endgerät durchgeführt wird, wobei Bedingungen des Netzwerks eine Qualität des Anrufs durch Videokonferenz zwischen dem ersten und dem zweiten Endgerät verschlechtern können,
beinhaltend:
- Übertragen, an einen Server, einer Messung der Qualität des Anrufs durch Videokonferenz in Form einer ersten Nachricht, wobei die erste Nachricht Kennungen der Endgeräte in dem Netzwerk beinhaltet,
- und, bei Empfang einer zweiten Nachricht über eine Verknüpfung des ersten und des zweiten Endgeräts in Form eines Audioanrufs, wobei die zweite Nachricht eine Anweisung zum Verhindern des Animierens einer Mensch-Maschine-Schnittstelle zur Benachrichtigung über einen eingehenden Anruf umfasst, Lesen und Interpretieren der zweiten Nachricht, um den Audioanruf zu empfangen, ohne die Mensch-Maschine-Schnittstelle zur Benachrichtigung über einen eingehenden Anruf des ersten Endgeräts zu animieren.

8. Verfahren nach Anspruch 7, wobei, wenn das erste Endgerät das anrufende Endgerät ist, das Verfahren vor der Herstellung der Videokonferenzsitzung Folgendes beinhaltet:
- Animieren einer Mensch-Maschine-Schnittstelle auf dem ersten Endgerät, um eine Schätzung einer erwarteten Qualität eines Anrufs durch Videokonferenz zwischen dem ersten und dem zweiten Endgerät anzuzeigen, bevor der Anruf initiiert wird.

9. Server zur Verarbeitung eines Anrufs zwischen mindestens zwei Endgeräten über ein Netzwerk, wobei der Anruf eine laufende Videokonferenzsitzung zwischen den Endgeräten ist, wobei Bedingungen des Netzwerks eine Qualität des Anrufs durch Videokonferenz zwischen den Endgeräten verschlechtern können,
wobei der Server mindestens einen Prozessor beinhaltet, der zu Folgendem konfiguriert ist:
- bei Empfang einer ersten Nachricht über eine Verschlechterung der Qualität des Anrufs durch Videokonferenz, wobei die erste Nachricht von mindestens einem der Endgeräte stammt und Kennungen der Endgeräte in dem Netzwerk beinhaltet, Unterbrechen des Anrufs durch Videokonferenz und
- Verwenden der Kennungen der Endgeräte in dem Netzwerk, um an die Endgeräte eine zweite Nachricht über eine Verknüpfung der Endgeräte in Form eines Audioanrufs zu übertragen, wobei die zweite Nachricht eine Anweisung zum Verhindern des Animierens einer Mensch-Maschine-Schnittstelle zur Benachrichtigung über einen eingehenden Anruf umfasst.

10. Server nach Anspruch 9, wobei die zweite Nachricht in Form mindestens eines Rahmens vorliegt, der im Rahmenkopf die Anweisung zum Verhindern des Animierens der Schnittstelle zur Benachrichtigung über einen eingehenden Anruf enthält.

11. Server nach Anspruch 9 oder 10, wobei das Netzwerk ein Mobilfunknetzwerk ist und der Audioanruf durch GSM-Kommunikation hergestellt wird.

12. Server nach einem der Ansprüche 9 bis 11, wobei der mindestens eine Prozessor zu Folgendem konfiguriert ist:
- bei Empfang, während zwischen den Endgeräten eine Audioanrufsitzung läuft, einer dritten Nachricht über eine Verbesserung der Bedingungen des Netzwerks, wobei die dritte Nachricht Kennungen der Endgeräte in dem Netzwerk beinhaltet und sich die Bedingungen des Netzwerks verbessert haben, sodass sie einen Anruf durch Videokonferenz zwischen den Endgeräten gestatten, Unterbrechen des laufenden Audioanrufs und
- Verwenden der Kennungen der Endgeräte in dem Netzwerk, um an die Endgeräte eine vierte Nachricht über eine Verknüpfung der Endgeräte in Form eines Anrufs durch Videokonferenz zu übertragen, wobei die vierte Nachricht eine Anweisung zum Verhindern des Animierens der Mensch-Maschine-Schnittstelle zur Benachrichtigung über einen eingehenden Anruf umfasst.

13. Erstes Endgerät eines Kommunikationsnetzwerks, das mindestens einen Prozessor beinhaltet, der zu Folgendem konfiguriert ist:
während einer Videokonferenzsitzung zwischen dem ersten Endgerät und mindestens einem zweiten Endgerät, wobei Bedingungen des Netzwerks eine Qualität des Anrufs durch Videokonferenz zwischen dem ersten und dem zweiten Endgerät verschlechtern können,
- Übertragen, an einen Server, einer Messung der Qualität des Anrufs durch Videokonferenz zwischen den zwei Endgeräten und
- Übertragen, an den Server, einer Messung einer Qualität des Anrufs durch Videokonferenz in Form einer ersten Nachricht, wobei die erste Nachricht Kennungen des ersten und des zweiten Endgeräts in dem Netzwerk beinhaltet,
- und, bei Empfang der zweiten Nachricht über eine Verknüpfung des ersten und des zweiten Endgeräts in Form eines Audioanrufs, wobei die zweite Nachricht eine Anweisung zum Verhindern des Animierens einer Mensch-Maschine-Schnittstelle zur Benachrichtigung über einen eingehenden Anruf umfasst, Lesen und Interpretieren der zweiten Nachricht, um den Audioanruf zu empfangen, ohne die Mensch-Maschine-Schnittstelle zur Benachrichtigung über einen eingehenden Anruf des ersten Endgeräts zu animieren.

14. Erstes Endgerät eines Kommunikationsnetzwerks nach Anspruch 13, wobei, wenn das erste Endgerät das anrufende Endgerät ist, der mindestens eine Prozessor dazu konfiguriert ist, vor der Herstellung der Videokonferenzsitzung eine Mensch-Maschine-Schnittstelle auf dem ersten Endgerät zu animieren, um eine Schätzung einer erwarteten Qualität eines Anrufs durch Videokonferenz zwischen dem ersten und dem zweiten Endgerät anzuzeigen, bevor der Anruf initiiert wird.

15. Computerprogramm, umfassend Anweisungen zur Durchführung des Verfahrens nach einem der Ansprüche 1 bis 8, wenn die Anweisungen durch einen Prozessor einer Verarbeitungsschaltung ausgeführt werden.

## Claims

1. Method for processing a call between at least two terminals via a network, a videoconference session between said terminals being in progress,
with network conditions being liable to degrade the quality of a videoconference call between said terminals, the method, which is implemented by at least one server, comprising the steps of:
- when a first message, that the videoconference call quality has been degraded, is received from the server, the first message originating from at least one of said terminals and comprising network identifiers of said terminals, interrupting the videoconference call, and
- using said identifiers of said terminals to transmit, to said terminals, a second message, for said terminals to be connected in the form of an audio call, the second message comprising an instruction to prevent a human-machine interface for warning of an incoming call from being activated.

2. Method according to Claim 1, wherein the second message is in the form of at least one frame containing, in the frame header, said instruction to prevent the interface for warning of an incoming call from being activated.

3. Method according to Claim 1 or 2, wherein the videoconference session is in the IP protocol.

4. Method according to Claim 2, wherein said frame is an SIP frame.

5. Method according to one of Claims 1 to 4, wherein the network is a cellular network, and the audio call is established by GSM communication.

6. Method according to one of Claims 1 to 5, an audio call session being in progress between said terminals, and network conditions being improved in order to make a videoconference call between said terminals possible, the method further comprising the steps of:
- when a third message, that the network conditions have improved, is received, the third message comprising network identifiers of said terminals, interrupting the audio call in progress,
- using the network identifiers of said terminals to transmit, to said terminals, a fourth message, for said terminals to be connected in the form of a videoconference call, the fourth message comprising an instruction to prevent the human-machine interface for warning of an incoming call from being activated.

7. Method implemented by at least one first terminal of a communication network, the method being implemented during a videoconference session between said first terminal and at least one second terminal, with network conditions being liable to degrade the quality of a videoconference call between said first terminal and second terminal,
comprising:
- transmitting, to a server, a measurement of said videoconference call quality, in the form of a first message, the first message comprising network identifiers of said terminals,
- and, when a second message, for said first terminal and second terminal to be connected in the form of an audio call, said second message comprising an instruction to prevent a human-machine interface for warning of an incoming call from being activated, is received, reading and interpreting the second message in order to receive the audio call without activating the human-machine interface for warning of an incoming call of said first terminal.

8. Method according to Claim 7, wherein, with said first terminal being the calling terminal, the method comprises, before the videoconference session is established:
- activating a human-machine interface on said first terminal in order to indicate an estimate of the expected quality of a videoconference call between said first terminal and second terminal, before initiating the call.

9. Server for processing a call between at least two terminals via a network, the call being a videoconference session in progress between said terminals,
with network conditions being liable to degrade the quality of a videoconference call between said terminals, the server comprising at least one processor configured to:
- when a first message, that the videoconference call quality has been degraded, is received, the first message originating from at least one of said terminals and comprising network identifiers of said terminals, interrupt the videoconference call, and
- use the network identifiers of said terminals to transmit, to said terminals, a second message, for said terminals to be connected in the form of an audio call, the second message comprising an instruction to prevent a human-machine interface for warning of an incoming call from being activated.

10. Server according to Claim 9, wherein the second message is in the form of at least one frame containing, in the frame header, said instruction to prevent the interface for warning of an incoming call from being activated.

11. Server according to Claim 9 or 10, wherein the network is a cellular network, and the audio call is established by GSM communication.

12. Server according to one of Claims 9 to 11, wherein said at least one processor is configured to:
- when, whilst an audio call session is in progress between said terminals, a third message, that the network conditions have improved, is received, the third message comprising network identifiers of said terminals and the network conditions being improved in order to make a videoconference call between said terminals possible, interrupt the audio call in progress, and
- use the network identifiers of said terminals to transmit, to said terminals, a fourth message, for said terminals to be connected in the form of a videoconference call, the fourth message comprising an instruction to prevent the human-machine interface for warning of an incoming call from being activated.

13. First terminal of a communication network, comprising at least one processor configured to:
during a videoconference session between said first terminal and at least one second terminal, with network conditions being liable to degrade the quality of a videoconference call between said first terminal and second terminal,
- transmit, to a server, a measurement of said quality of a videoconference call between the two terminals, and
- transmit, to the server, a measurement of the videoconference call quality in the form of a first message, the first message comprising network identifiers of said first terminal and second terminal,
- and, when the second message, for said first terminal and second terminal to be connected in the form of an audio call, said second message comprising an instruction to prevent a human-machine interface for warning of an incoming call from being activated, is received, read and interpret the second message in order to receive the audio call without activating the human-machine interface for warning of an incoming call of said first terminal.

14. First terminal of a communication network according to Claim 13, wherein, said first terminal being the calling terminal, said at least one processor is configured to activate a human-machine interface on said first terminal, before the videoconference session is established, in order to indicate an estimate of the expected quality of a videoconference call between said first terminal and second terminal, before initiating the call.

15. Computer program comprising instructions for implementing the method according to one of Claims 1 to 8 when said instructions are executed by a processor of a processing circuit.
